# EUROPÄISCHE PATENTSCHRIFT

(11) **EP 3 353 026 B1**
(45) Veröffentlichungstag und Bekanntmachung des Hinweises auf die Patenterteilung: **19.06.2019**
(21) Anmeldenummer: 16750380.4
(22) Anmeldetag: 22.07.2016
(51) Int. Cl.: B60T 13/66

(54) **VERFAHREN ZUM EINSTELLEN VON BREMSDRÜCKEN EINES KRAFTFAHRZEUGS, BREMSANLAGE ZUR DURCHFÜHRUNG DES VERFAHRENS SOWIE KRAFTFAHRZEUG**
METHOD AND SYSTEM FOR CONTROLLING BRAKE PRESSURE IN A VEHICLE
PROCÉDÉ ET SYSTÈME POUR CONTRÔLER LA PRESSION DE FREINAGE D'UN VÉHICULE

(30) Priorität: 21.09.2015 DE 102015012377
(43) Veröffentlichungstag der Anmeldung: 01.08.2018
(73) Patentinhaber: WABCO GmbH, 30453 Hannover (DE)
(72) Erfinder: ECKERT, Horst, 31547 Rehburg-Loccum (DE)
(74) Vertreter: Rabe, Dirk-Heinrich
(86) Internationale Anmeldenummer: PCT/EP2016/001282
(87) Internationale Veröffentlichungsnummer: WO 2017/050406

(56) Entgegenhaltungen:
- EP-A1- 0 527 005
- WO-A1-2006/120128
- DE-A1-102009 058 154
- DE-T5-112012 006 667

## Beschreibung

Die Erfindung betrifft ein Verfahren zum Einstellen von Bremsdrücken an den Radbremsen eines Kraftfahrzeugs gemäß dem Oberbegriff des Anspruchs 1. Die Erfindung betrifft außerdem eine Bremsanlage eines Kraftfahrzeugs gemäß dem Oberbegriff des Anspruchs 12. Außerdem betrifft die Erfindung gemäß Anspruch 16 ein Kraftfahrzeug mit einer solchen Bremsanlage.

Zum Abbremsen eines Kraftfahrzeugs werden die Räder des Kraftfahrzeugs gebremst. Insbesondere bei Nutzfahrzeugen werden Bremszylinder der Räder betätigt, wobei der erforderliche Bremsdruck in der Regel pneumatisch erzeugt wird. Fordert der Fahrer des Fahrzeugs eine Bremsung über ein Bremspedal an, so wird der Bremsdruck in einem Normalbremsmodus in Abhängigkeit der Fahrerbremsanforderung eingestellt. Alternativ zum Normalbremsmodus wird der Bremsdruck von einer Steuereinheit an den jeweiligen Radbremsen eingestellt und nach den Vorgaben der Steuereinheit gesteuert. DE 10 2009 058 154 A1 offenbart eine Bremsanlage, deren Steuereinheit bei Feststellung von Bremsbedürfnissen im Drucksteuermodus die erforderlichen Bremsdrücke einstellt. Derartige Bremsbedürfnisse können beispielsweise Antiblockiereingriffe sein, wenn ein Bremsbedürfnis an bestimmten Rädern festgestellt wird. Die bekannte Bremsanlage berücksichtigt auch externe Bremsanforderungen, beispielsweise eines externen Fahrerassistenzsystems. Das Fahrerassistenzsystem gibt dabei beispielsweise über einen Datenbus des Fahrzeugs externe Bremsanforderungssignale an die Steuereinheit aus. Die Steuereinheit steuert dabei einen resultierenden Bremsdruck an den jeweiligen Radbremsen unter Berücksichtigung der externen Bremsanforderung und der Fahrerbremsanforderung ein. Empfängt die Steuereinheit eine externe Bremsanforderung und liegt zugleich eine Fahrerbremsanforderung des Fahrers des Kraftfahrzeugs vor, so überlagert die Steuereinheit der bekannten Bremsanlage die Fahrerbremsanforderung und die externe Bremsanforderung, sodass die externe Bremsanforderung zusätzlich beziehungsweise additiv ausgeübt wird. Alternativ soll bei der bekannten Bremsanlage in einem Modus "Maximum" die Steuereinheit nur den Maximalwert der bereits von der Bremsanlage intern angeforderten Soll-Bremswerte und des externen Soll-Bremswerts gebildet werden, wobei die externe Bremsanforderung nur eingestellt wird, wenn sie höher ist, als die interne Bremsanforderung. Durch die Verknüpfung der externen Bremsanforderung und der Fahrerbremsanforderung zu einem resultierenden Bremsdruck ist sichergestellt, dass eine externe Bremsanforderung im Drucksteuermodus auch bei Fehlen einer Fahrerbremsanforderung angesteuert wird. Empfängt die Steuereinheit keine externe Bremsanforderung mehr beziehungsweise nimmt das Fahrerassistenzsystem die externe Bremsanforderung zurück, so beendet die bekannte Bremsanlage den Drucksteuermodus und gibt dem Fahrer die volle Kontrolle über die Bremssteuerung im Normalbremsmodus zurück. Im praktischen Fahrbetrieb kommt es im Moment der Rückschaltung in den Normalbremsmodus und Übergabe der Kontrolle an den Fahrer sehr oft zu einem unangenehmen Rucken des Fahrzeugs oder in anderen Fällen zu einer plötzlichen Unterbremsung. Derartige Unstetigkeiten im Bremsverhalten des Kraftfahrzeugs verunsichern oft den Fahrer und können daher eine Gefahrenquelle für die Sicherheit des Kraftfahrzeugs im Straßenverkehr sein

EP 0527005 A1 betrifft ein elektronisches Bremssystem (EBS) für Fahrzeuge mit Rädern, und befasst sich insbesondere mit der Überwachung der Druckregelvorrichtungen solcher Systeme. DE 112012006667 A1 bezieht sich auf eine Fahrt-Steuer-/Regeleinrichtung, welche die Fahrzeuggeschwindigkeit von einem Fahrzeug steuert/regelt. WO 2006120128 A1 betrifft ein Verfahren zur Steuerung einer Antriebseinheit eines Fahrzeugs, bei dem ausgehend von dem Vergleich einer ersten Beschleunigungsgröße, die wenigstens ausgehend vom Betriebszustand der Antriebseinheit berechnet wird, und einer zweiten Beschleunigungsgröße ein Fehler erkannt wird, dass die zweite Beschleunigungsgröße eine erste Komponente in Richtung der Fahrzeuglängsachse und eine zweite Komponente senkrecht zu der Fahrzeuglängsachse beinhaltet.

Der vorliegenden Erfindung liegt die Aufgabe zugrunde, bei einer Einstellung des Bremsdrucks in einem Drucksteuermodus ein stetiges Bremsverhalten nach Rücknahme einer externen Bremsanforderung zu gewährleisten.

Diese Aufgabe wird erfindungsgemäß durch ein Verfahren zum Einstellen von Bremsdrücken mit den Merkmalen des Anspruchs 1 gelöst. Außerdem wird die Aufgabe durch eine Bremsanlage eines Kraftfahrzeugs zur Durchführung des Verfahrens mit den Merkmalen des Anspruchs 12 gelöst. Schließlich löst Anspruch 16 die Aufgabe durch ein Kraftfahrzeug mit einer derartigen Bremsanlage.

Erfindungsgemäß ist der Steuereinheit der Bremsanlage ein Schwellwert für eine Beendigung des Drucksteuermodus vorgegeben, wobei die Steuereinheit zur Durchführung von Vergleichen eines die Fahrerbremsanforderung repräsentierenden Größenwerts mit dem vorgegebenen Schwellwert ausgebildet ist. Die Fahrerbremsanforderung wird dabei der Steuereinheit über einen Größenwert mitgeteilt, welche der angeforderten Bremsleistung quantitativ entspricht und diese somit repräsentiert. Der Größenwert ist dabei der Wert einer physikalischen Größe, welche quantitativ die Fahrerbremsanforderung bestimmt. Er umfasst Information zu einem Zahlenwert sowie zu der Einheit bzw. Dimension der physikalischen Größe.

Der Drucksteuermodus wird erfindungsgemäß nach Zurücknahme der externen Bremsanforderung in Abhängigkeit eines Vergleichs der Fahrerbremsanforderung mit dem vorgegebenen Schwellwert beendet, wodurch dem Fahrer des Kraftfahrzeugs die volle Kontrolle über das Bremsverhalten erst nach Erfüllung eines weiteren Kriteriums zusätzlich zu der Rücknahme der externen Bremsanforderung gegeben ist. Die Rückschaltung vom externen Bremsmodus in den Normalbremsmodus erfolgt nämlich erst, wenn die Steuereinheit die Beendigung des Drucksteuermodus in Abhängigkeit des Vergleichs der Fahrerbremsanforderung mit dem Schwellwert zulässt. Bis dahin wird der Bremsdruck trotz Zurücknahme der externen Bremsanforderung weiterhin im Drucksteuermodus von der Steuereinheit eingestellt, sodass ein Rucken oder eine plötzliche Unterbremsung ausgeschlossen ist. Bis zur Beendigung des Drucksteuermodus wird der Bremsdruck weiterhin von der Steuereinheit über die von ihr kontrollierten Ventile, beispielsweise die Drucksteuerventile der jeweiligen Radbremsen, pulsmoduliert gesteuert. Neben einer Steuerung des Bremsdrucks entsprechend der vorgegebenen Bremsanforderung kann dabei auch in einer alternativen Ausführungsform eine Regelung des Bremsdrucks vorgesehen sein.

Der Schwellwert wird vorteilhaft in derselben Dimension wie der die Fahrerbremsanforderung bestimmende Größenwert der Steuereinheit vorgegeben. Er wird dadurch in der Dimension der physikalischen Größe angegeben, in welcher die Steuereinheit auch die Information der Fahrerbremsanforderung verarbeitet. Anders ausgedrückt werden der Größenwert entsprechend der Fahrerbremsanforderung und der Schwellwert in physikalischen Größen mit gleichen qualitativen Eigenschaften verarbeitet, insbesondere in einer Verzögerung. Alternativ können auch die Informationen der Fahrerbremsanforderung von der Steuereinheit in eine verarbeitbare und mit dem Schwellwert vergleichbare physikalische Größe umgerechnet werden.

Bevorzugt wird eine Wunschverzögerung als die Fahrerbremsanforderung repräsentierender Größenwert ermittelt. In dieser Ausführungsform wird der Schwellwert ebenfalls mit der Dimension der Verzögerung, das heißt negativer Beschleunigung, des Fahrzeugs ermittelt und vorgegeben. Auf diese Weise ist im Drucksteuermodus eine einfache Verknüpfung der Fahrerbremsanforderung mit der externen Bremsanforderung möglich, welche in der Regel von einem externen Fahrerassistenzsystem in der Dimension Verzögerung angefordert wird. Aus den Verzögerungswerten entsprechend der Fahrerbremsanforderung und der externen Bremsanforderung wird eine resultierende Sollverzögerung ermittelt, welche der Einstellung eines resultierenden Bremsdrucks an den Radbremsen zugrunde gelegt wird. Die Wunschverzögerung des Fahrers wird aus den zur Verfügung stehenden Messsignalen eines dem Bremssignalgeber oder dem an den Bremssignalgeber gekoppelten Betriebsbremsventils für den Normalbremsmodus hergeleitet, beispielsweise aus den Messsignalen eines Drucksensors oder eines Wegsensors des Bremssignalgebers.

In einer vorteilhaften Ausführungsform der Erfindung wird der Drucksteuermodus beendet, nachdem die Fahrerbremsanforderung, bzw. der Größenwert, welcher die Fahrerbremsanforderung repräsentiert, den vorgegebenen Schwellwert überschreitet. Dadurch ist gewährleistet, dass bei nur geringer Fahrerbremsanforderung der Drucksteuermodus aufrechterhalten wird und ein stetiges Bremsverhalten gewährleistet ist, während bei einer genügend hohen Fahrerbremsanforderung, welche den Schwellwert überschreitet, dem Fahrer die volle Kontrolle über das Bremsverhalten des Kraftfahrzeugs übergeben ist. Solange im Verlauf des Bremsvorgangs die Fahrerbremsanforderung nicht über den Schwellwert hinaus ansteigt und auch nicht nach einer Teilreduzierung der Fahrerbremsanforderung wieder nennenswert ansteigt, sondern beispielsweise konstant bleibt oder sinkt, wird der Bremsdruck an den Radbremsen im Drucksteuermodus eingestellt und somit ein stetiges Bremsverhalten sichergestellt.

In einer vorteilhaften Ausführungsform wird der die Fahrerbremsanforderung repräsentierende Größenwert zum Zeitpunkt der Zurücknahme der externen Bremsanforderung abgespeichert und der Schwellwert anhand des abgespeicherten Größenwerts bestimmt. Der Schwellwert wird bis zur Beendigung des Drucksteuermodus vorgegeben und laufend ein Vergleich der aktuellen Fahrerbremsanforderung, das heißt des Größenwerts wie insbesondere der Wunschverzögerung, mit dem Schwellwert durchgeführt. Erfindungsgemäß wird der Drucksteuermodus bis zum Überschreiten dieses Schwellwerts aufrechterhalten. Bremst der Fahrer im weiteren Verlauf der Bremsung hinzu, wird der Drucksteuermodus solange aufrechterhalten, wie die Fahrerbremsanforderung unterhalb des Schwellwerts verbleibt. Übersteigt die Fahrerbremsanforderung den Schwellwert , das heißt der Fahrer fordert mehr Bremskraft an als bei der vorherigen Verfahrensschleife mit Vergleich der Fahrerbremsanforderung mit dem Schwellwert, wird der Drucksteuermodus sofort beendet.

Vorteilhaft wird der vorzugebende Schwellwert durch Verknüpfung des abgespeicherten Größenwerts der Fahrerbremsanforderung mit einem Toleranzwert gebildet. Die Dimension des Toleranzwerts liegt zwischen 1 und 10 Prozent, vorteilhaft zwischen 3 und 5 Prozent (bei Vorgabe von Verzögerungen vorteilhaft 0.3 bis 0.5 m/s²).

Anstelle eines Vergleichs der Fahrerbremsanforderung mit dem gespeicherten Schwellwert im Sinn einer Größer/Kleiner- Abfrage (gegebenenfalls unter Berücksichtigung eines Toleranzwerts) ist in einer bevorzugten Ausführungsform der Erfindung eine laufende Aktualisierung des Schwellwerts mit dem aktuellen Größenwert der Fahrerbremsanforderung vorgesehen, wobei der aktualisierte Schwellwert dem folgenden Vergleich mit dem Größenwert der Fahrerbremsanforderung zugrunde gelegt wird. Da bis zur Beendigung des Drucksteuermodus fortlaufend Vergleiche der aktuellen Größenwerte der Fahrerbremsanforderung mit dem abgespeicherten Schwellwert durchgeführt werden, wird bei jedem der zeitdiskreten Vergleiche jeweils der aktualisierte Schwellwert dem folgenden Vergleich mit einer aktuellen Fahrerbremsanforderung zugrunde gelegt. Auf diese Weise wird eine möglichst rasche und dabei ruckfreie Rückschaltung in den Normalbremsmodus erreicht. Dies wird bevorzugt zusätzlich dadurch gefördert, dass Erhöhungen der Fahrerbremsanforderung bei der Aktualisierung des Schwellwerts nicht berücksichtigt werden.

In einer weiteren vorteilhaften Ausführungsform wird der Drucksteuermodus in Abhängigkeit eines Vergleichs einer aktuellen Geschwindigkeit und einem vorgegebenen Umschaltgeschwindigkeitswert beendet. Die Überwachung der aktuellen Geschwindigkeit bildet ein weiteres Kriterium zur Beendigung des Drucksteuermodus nach einer Rücknahme der externen Bremsanforderung. Es ist nämlich wahrscheinlich, dass die aktuelle Bremsung, wenn die Geschwindigkeit nach Rücknahme der externen Bremsanforderung und vorliegender Fahrerbremsanforderung kleiner als die vorgegebene Umschaltgeschwindigkeit ist, alsbald beendet sein wird und das Kraftfahrzeug steht. In dieser Situation ist mit hoher Priorität das stetige Bremsverhalten sicher zu stellen. Bei Geschwindigkeiten des Fahrzeugs oberhalb der Umschaltgeschwindigkeit, beispielsweise 30 km/h, wirkt sich ein Sprung im Bremsdruck an den Radbremsen beim Umschalten vom Drucksteuermodus in den Normalbremsmodus vergleichsweise weniger deutlich aus und wird in dieser Ausführungsform mit geringerer Priorität bewertet als das Bedürfnis des Fahrers nach Kontrolle des Bremsverhaltens (Normalbremsmodus), welches vor allem bei einer Bremsung im unteren Geschwindigkeitsbereich zu berücksichtigen ist, insbesondere bei einer Anhaltebremsung.

Um eine Rückschaltung in den Normalbremsmodus bei jedem möglichen Bremsverlauf und Kombination von externer und interner Bremsanforderung sicher zu stellen, wird der Drucksteuermodus nach Ablauf einer vorgegebenen Zeitdauer seit Rücknahme der externen Bremsanforderung beendet. Das vorgegebene Zeitfenster beträgt etwa zwei bis fünfzehn Sekunden, beispielsweise acht Sekunden. Ist die Zeit vergangen, wird in jedem Fall dem Fahrer die volle Kontrolle über das Bremsverhalten des Fahrzeugs zurück übergeben.

Die Steuereinheit ist in der bevorzugten Ausführungsform einer erfindungsgemäßen Bremsanlage Teil eines Antiblockiersystems und wertet dynamische Zustandsgrößen der zu bremsenden Räder aus. Bei Vorliegen einer Blockierneigung eines oder mehrerer Räder steuert oder regelt die Steuereinheit den Bremsdruck der betroffenen Radbremsen im Drucksteuermodus. Eingriffsmaßnahmen des Antiblockiersystems können somit als interne Bremsanforderungen bezeichnet werden, welche die Steuereinheit selbst aufgrund der laufend zugeführten Messgrößen der dynamischen Zustandsgrößen der zu bremsenden Räder ermittelt und gegebenenfalls den Bremsdruck an bestimmten Radbremsen einsteuert beziehungsweise regelt. Der Drucksteuermodus, in welchem die Steuereinheit aktiv den Bremsdruck beeinflusst, wird auch für die Einsteuerung externer Bremsanforderungen eingesetzt, beispielsweise einer externen Bremsanforderung eines Fahrerassistenzsystems.

Vorzugsweise steuert die Steuereinheit die Bremsdrücke an den Radbremsen jeweils über ein Drucksteuerventil. Die Bremskreise der Drucksteuerventile sind über Ansteuerung jeweils eines Aktivierungsventils pro Bremskreis mit einem Druckmittelvorrat verbindbar. Die Aktivierungsventile werden von der Steuereinheit geschaltet. Bei Beendigung des Drucksteuermodus wird das Aktivierungsventil des betreffenden Bremskreises von der Steuereinheit in die Schließstellung gebracht, wodurch die Verbindung des beziehungsweise der angeschlossenen Drucksteuerventile mit dem Druckmittelvorrat getrennt ist. Der Bremsdruck an den Radbremsen ist dann im Normalbremsmodus allein in Abhängigkeit von der Fahrerbremsanforderung beeinflussbar, nämlich insbesondere über ein Betriebsbremsventil, dessen Stellung mittels des Fahrpedals in der Fahrerkabine veränderbar ist.

Die Aktivierungsventile sind vorteilhaft als 3/2-Wege-Ventile ausgebildet, wodurch die Druckleitung hinter dem Aktivierungsventil bedarfsweise entlüftet werden kann.

Die Anordnung der Aktivierungsventile in den jeweiligen Bremskreisen ermöglicht eine sofortige Beendigung des Drucksteuermodus durch Trennen der Verbindung der Drucksteuerventile von dem jeweiligen Druckmittelvorrat, sodass rasch vom Drucksteuermodus in den Normalbremsmodus umgeschaltet werden kann. Vorteilhaft sind die Radbremsen und die den Radbremsen zugeordneten Drucksteuerventile einer Achse in einem gemeinsamen Bremskreis angeordnet und werden im Drucksteuermodus über ein gemeinsames Aktivierungsventil des betreffenden Bremskreises aktiviert.

Die Erfindung ist insbesondere bei Nutzfahrzeugen vorteilhaft, welche mit pneumatisch betätigbaren Radbremsen ausgestattet sind.

Ausführungsbeispiele der Erfindung sind nachstehend anhand der Zeichnung näher erläutert. Es zeigen:
- Fig. 1: ein pneumatisches und elektrisches Schema einer Bremsanlage eines Nutzfahrzeugs,
- Fig. 2: ein Flussschaubild eines Ausführungsbeispiels eines Verfahrens zum Einstellen der Bremsdrücke in einer Bremsanlage,
- Fig. 3: ein Flussschaubild eines zweiten Ausführungsbeispiels eines Verfahrens zur Einstellung von Bremsdrücken einer Bremsanlage,
- Fig.4: ein grafisches Schaubild des zeitlichen Verlaufs des resultierenden Druckverlaufs im Drucksteuermodus gemäß einer ersten Variante der Ausführungsbeispiele der Erfindung nach Fig. 2 oder Fig. 3,
- Fig.5: ein grafisches Schaubild des zeitlichen Verlaufs des resultierenden Druckverlaufs im Drucksteuermodus gemäß einer zweiten Variante der Ausführungsbeispiele der Erfindung nach Fig. 2 oder Fig. 3,
- Fig.6: ein grafisches Schaubild des zeitlichen Verlaufs des resultierenden Druckverlaufs im Drucksteuermodus gemäß einer dritten Variante der Ausführungsbeispiele der Erfindung nach Fig. 2 oder Fig. 3.

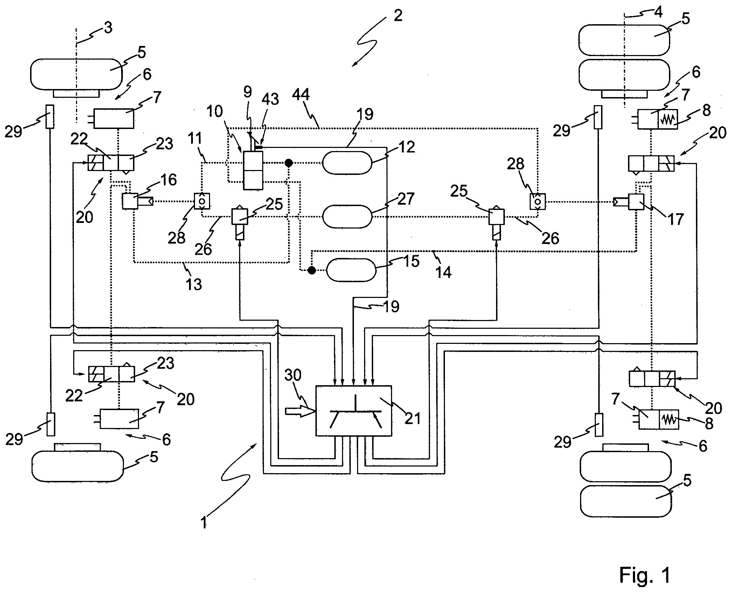

Fig. 1 zeigt einen elektrisch-pneumatischen Plan einer Bremsanlage 1 eines Kraftfahrzeugs 2. insbesondere eines Nutzfahrzeugs. Elektrische Leitungen sind mit Volllinien und pneumatische Leitungen mit punktierten Linien dargestellt. Das Kraftfahrzeug 2 umfasst im gezeigten Ausführungsbeispiel zwei Achsen, nämlich eine Vorderachse 3 und eine Hinterachse 4, an denen jeweils beidseitig Räder 5 angeordnet sind. Zum Abbremsen der Räder 5 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 anliegenden pneumatischen Bremsdruck eine Bremskraft auf das drehende Rad 5 aus. An den Rädern 5 der Hinterachse 4 sind dabei Bremszylinder 7 mit Federspeichern 8 vorgesehen, welche einer Feststellbremse dienen.

In der Fahrerkabine des Kraftfahrzeugs 2 ist ein Bremspedal 9 angeordnet, welches an ein Betriebsbremsventil 10 gekoppelt ist. Der Fahrer des Kraftfahrzeugs 2 kann durch Betätigen des Bremspedals 9 pneumatischen Druck zu den Bremszylindern 7 durchschalten und somit die Radbremsen 6 betätigen. Hierzu beherrscht das Betriebsbremsventil 10 pneumatische Bremsleitungen 11, 44 zwischen den Druckmittelvorräten 12, 15 und den Bremszylindern 7.

Im gezeigten Ausführungsbeispiel sind die Radbremsen 6 der Vorderachse 3 einem gemeinsamen ersten Bremskreis 13 zugeordnet, während die Radbremsen 6 der Hinterachse 4 über einen zweiten Bremskreis 14 betätigbar sind. Der erste Druckmittelvorrat 12 ist dabei dem ersten Bremskreis 13 zugeordnet und über die Bremsleitung 11 an die Bremszylinder 7 der Vorderachse 3 angeschlossen. Der zweite Bremskreis 14 der Hinterachse 4 wird über einen zweiten Druckmittelvorrat 15 mit Druckmittel versorgt. Der zweite Bremskreis 14 ist analog dem ersten Bremskreis 13 aufgebaut, das heißt, dass die Bremsleitung 44 zwischen dem zweiten Druckmittelvorrat 15 zu den Radbremsen 6 der Hinterachse 4 über das Betriebsbremsventil 10 freigebbar ist und daher der Bremsdruck in Abhängigkeit von der Stellung des Bremspedals 9 einstellbar ist.

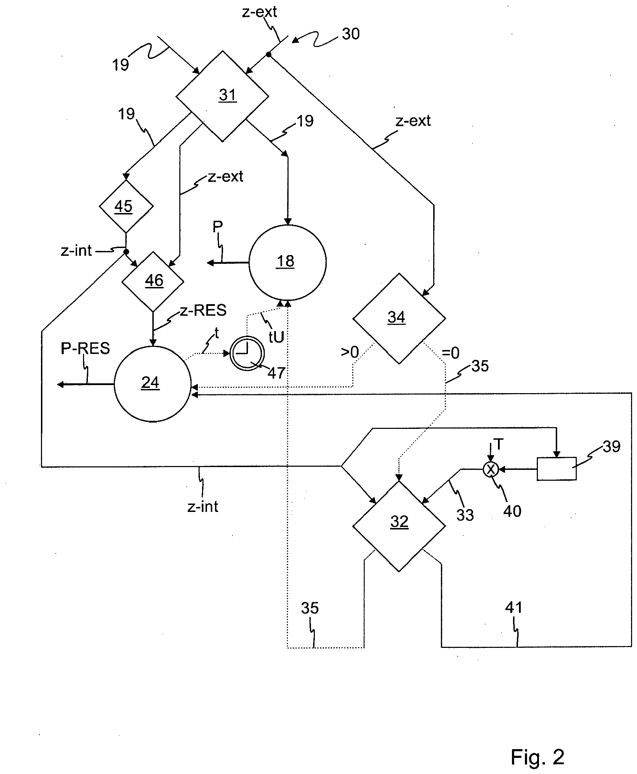

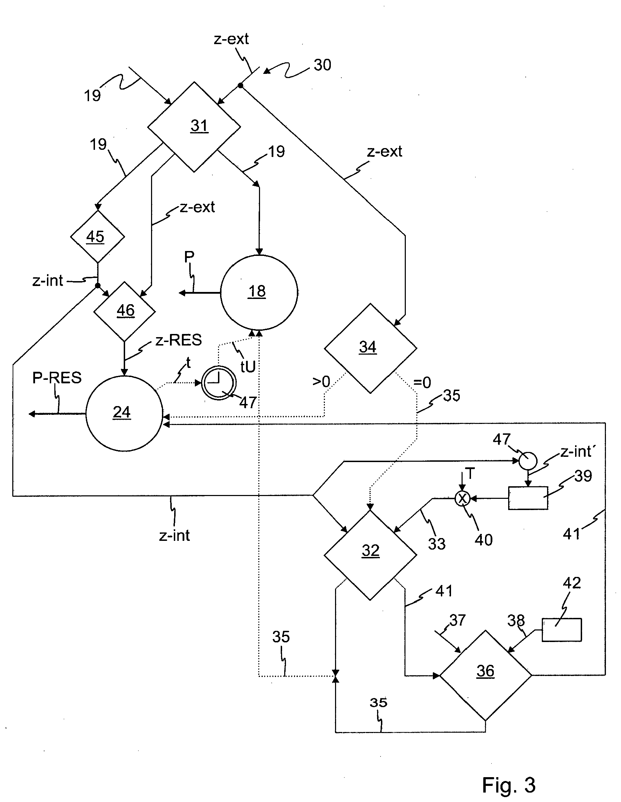

Im ersten Bremskreis 13 ist ein pneumatisch betätigbares Relaisventil 16 und analog im zweiten Bremskreis 14 ein Relaisventil 17 angeordnet. Die pneumatisch betätigbaren Relaisventile 16, 17 werden über den pneumatischen Druck aus dem jeweils angeschlossenen Druckmittelvorrat 12, 15 geöffnet. Wird das Betriebsbremsventil 10 geöffnet, so schalten die Relaisventile 16, 17 den anstehenden Bremsdruck zu den angeschlossenen Radbremsen 6 durch. In einem Normalbremsmodus (Bezugszeichen 18 in Fig. 2, Fig. 3) ist der Bremsdruck in den Radbremsen 6 in Abhängigkeit der Fahrerbremsanforderung (Bezugszeichen 19 in Fig. 2, Fig. 3) einstellbar. Im Normalbremsmodus 18 hat daher der Fahrer des Kraftfahrzeugs 2 über die Betätigung des Bremspedals 9 die volle Kontrolle über das Bremsverhalten des Kraftfahrzeugs 2.

Jeder Radbremse 6 der Bremsanlage 1 ist ein Drucksteuerventil 20 zugeordnet, welche von einer Steuereinheit 21 elektrisch angesteuert werden. Die Drucksteuerventile 20 der Radbremsen 6 der Vorderachse 3 sind im ersten Bremskreis 13 und die Drucksteuerventile 20 der Hinterachse 4 im zweiten Bremskreis 14 angeordnet. Die Drucksteuerventile 20 sind jeweils eine Kombination von wenigstens zwei Magnetventilen, nämlich einem Einlassventil 22 und einem Auslassventil 23. Das Einlassventil 22 dient dabei prinzipiell zur Druckerhöhung beziehungsweise zum Halten des Drucks im Bremszylinder 7, während das Auslassventil 23 zur Reduzierung des Bremsdrucks geöffnet wird und den jeweils angeschlossenen Bremszylinder 7 entlüftet. Das Einlassventil 22 und das Auslassventil 23 sind im Ausführungsbeispiel 2/2-Wege-Ventile, welche elektrisch von der Steuereinheit 21 ansteuerbar sind. Im Normalbremsmodus 18 sind die Einlassventile 22 in die geöffnete und die Auslassventile 23 in die geschlossene Stellung geschaltet, so dass der Bremsdruck durchgeschaltet ist.

Die Drucksteuerventile 20 werden von der Steuereinheit 21 in einem Drucksteuermodus (Bezugszeichen 24 in Fig. 2, Fig. 3) angesteuert. Im Drucksteuermodus 24 übernimmt die Steuereinheit 21 die Einstellung des Bremsdrucks der jeweiligen Radbremsen 6 durch entsprechende Ansteuerung der Drucksteuerventile 20. Jedem Bremskreis 13, 14 ist ein elektrisch betätigbares Aktivierungsventil 25 zugeordnet, welche von der Steuereinheit 21 betätigbar sind. Jedes Aktivierungsventil 25 ist als 3/2-Wege-Ventil ausgebildet, wodurch die Druckleitung hinter dem Aktivierungsventil bedarfsweise entlüftet werden kann. Im Drucksteuerbetrieb 24 wird durch Ansteuerung der Aktivierungsventile 25 Bremsdruck zu den Drucksteuerventilen 20 durchgeschaltet. Im gezeigten Ausführungsbeispiel beherrschen die Aktivierungsventile 25 jeweils eine Druckleitung 26 von einem dritten Druckmittelspeicher 27 zu den Relaisventilen 16, 17. Durch Betätigung des Aktivierungsventils 25 des ersten Bremskreises 13 kann somit das Relaisventil 16 der Vorderachse 3 betätigt werden. Analog wird das Relaisventil 17 der Hinterachse 4 durch Betätigung des Aktivierungsventils 25 des zweiten Bremskreises betätigt.

Das Betriebsbremsventil 10 und die Aktivierungsventile 25 sind jeweils über ein Doppelrückschlagventil 28 auf den pneumatischen Steuereingang des Relaisventils 16, 17 des jeweiligen Bremskreises 13, 14 gekoppelt.

Die Steuereinheit 21 ist dazu ausgebildet und konfiguriert, unabhängig von der Fahrerbremsanforderung 19 selbsttätig im Drucksteuermodus 24 auf den Bremsvorgang einzuwirken. Hierzu ermittelt die Steuereinheit 21 einen bestimmten Brems-Solldruck und steuert diesen Brems-Solldruck an den jeweiligen Radbremsen 6 durch Betätigung der Drucksteuerventile 22 ein. Die Entscheidung über eine Bremsmaßnahme und Bestimmung des entsprechenden Brems-Solldrucks ermittelt die Steuereinheit 21 auf der Grundlage der ihr zugeführten Informationen. Die Bremsanlage 1 umfasst ein Antiblockiersystem, wobei der Steuereinheit 21 laufend ermittelte dynamische Zustandsgrößen der Räder 5 zugeführt werden. Hierzu ist jedem Rad 5 ein Drehzahlsensor 29 zugeordnet, dessen Messsignale der Steuereinheit 21 eingegeben werden.

Durch Einstellung der Bremsdrücke im Drucksteuermodus 24 setzt die Steuereinheit 21 nicht nur interne Bremsanforderungen um, welche auf der Grundlage der ihr zugeführten dynamischen Zustandsgrößen des Fahrzeugs vorgegeben sind, sondern auch externe Bremsanforderungen 30. Die externe Bremsanforderung 30 wird von einem Fahrerassistenzsystem vorgegeben. Unter einer externen Bremsanforderung 30 ist dabei die Anforderung von Bremsleistung durch ein oder mehrere Fahrerassistenzsysteme oder andere externe Systeme zu verstehen, welche aufgrund ihrer Funktion im Kraftfahrzeug 2 ein Bremsmanöver anfordern. Bei Empfang einer externen Bremsanforderung 30 schaltet die Steuereinheit 21 vom Normalbremsmodus 18 in den Drucksteuermodus 24 und übernimmt die Steuerung beziehungsweise Regelung der Bremsdrücke an den einzelnen Rädern 5.

Wird die externe Bremsanforderung 30 zurückgenommen, das heißt, dass die Steuereinheit 21 keine externe Bremsanforderung 25 mehr empfängt, so leitet die Steuereinheit 21 eine Beendigung des Drucksteuermodus 24 ein, sofern keine Fahrerbremsanforderung 19 gegeben ist, das heißt, sofern der Fahrer nicht zusätzlich bremst. Diese Situation ist nachstehend anhand von Fig. 2 und Fig. 3 noch näher erläutert. Mit der Beendigung des Drucksteuermodus 24 erhält der Fahrer des Kraftfahrzeugs 2 somit wieder die volle Kontrolle über die Betätigung der Radbremsen 6 im Normalbremsmodus 18.

Die Bremsanlage 1 umfasst einen Bremssignalgeber 43, welcher signalübertragend mit der Steuereinheit 21 verbunden ist. Das Ausgangssignal des Bremssignalgebers 43 entspricht der Fahrerbremsanforderung 19, wobei beispielsweise die Stellung oder ein Betätigungsweg des Bremspedals 9, ein Betätigungsweg eines Bauteils des Betriebsbremsventils 10 oder ein vom Betriebsbremsventil 10 ausgesteuerter Bremsdruck gemessen werden kann. Über die signalübertragende Verbindung wird der Steuereinheit 21 die Fahrerbremsanforderung 19 mitgeteilt. Auf diese Weise ist die Steuereinheit 21 in der Lage, im Drucksteuermodus 18 ein Hinzubremsen des Fahrers, das heißt eine zusätzliche und gleichzeitig zur externen Bremsanforderung 30 auftretende Fahrerbremsanforderung 19 zu berücksichtigen.

Die Steuereinheit 21 berücksichtigt sowohl die Fahrerbremsanforderung 19 als auch die externe Bremsanforderung 30 in einem Verfahren zur Bestimmung des Bremsdrucks, welches nachstehend anhand von Fig. 2, 3, 4 und 5 beschrieben ist. Im Normalbremsmodus 18 wird der Bremsdruck stets allein in Abhängigkeit der Fahrerbremsanforderung 19 eingestellt beziehungsweise ein der Fahrerbremsanforderung 19 entsprechender Solldruck P-Soll eingestellt, solange die Steuereinheit keine externe Bremsanforderung 30 erfasst. Die Steuereinheit greift im Normalbremsmodus 18 nicht in die Einstellung des Bremsdrucks ein. Die Einlassventile 22 der Drucksteuerventile 20 bleiben geöffnet und die Auslassventile 23 geschlossen, wodurch der Fahrer die volle Kontrolle hat.

Empfängt die Steuereinheit 21 eine externe Bremsanforderung 30, so stellt die Steuereinheit 21 im Drucksteuermodus 24 an den Radbremsen einen resultierenden Bremsdruck P-RES unter Berücksichtigung der externen Bremsanforderung 30 und einer gegebenenfalls gleichzeitigen Fahrerbremsanforderung 19 ein. Der resultierende Bremsdruck P-RES wird in einem vorteilhaften Ausführungsbeispiel durch Addition der Fahrerbremsanforderung 19 und der externen Bremsanforderung 30 beziehungsweise der dieser Bremsanforderungen entsprechenden Sollbremsdrücken gebildet.

In einem Erfassungsschritt 31 erfasst die Steuereinheit die zu berücksichtigenden Bremsanforderungen, nämlich die Fahrerbremsanforderung 19 und die externe Bremsanforderung 30. Liegt keine externe Bremsanforderung 30 vor, so kann als resultierender Bremsdruck P-RES der Bremsdruck vom Normalbremsmodus 18 durchgeschaltet werden, welcher der Fahrerbremsanforderung 19 entspricht.

Im Drucksteuermodus 24 empfängt die Steuereinheit 21 die externe Bremsanforderung 30 eines externen Fahrerbremsassistenzsystems als externe Sollverzögerung z-ext. Die Fahrerbremsanforderung 19 wird der Steuereinheit 21 durch ein Messsignal eines Bremssignalgebers 43 (Fig. 1) oder eines dem Betriebsbremsventil 10 zugeordneten Drucksensors vorgegeben. Aus dem Messsignal wird in einem Umrechnungsschritt 45 eine Wunschverzögerung z-int als die Fahrerbremsanforderung 19 repräsentierenden Größenwert ermittelt. Die Wunschverzögerung z-int und die externe Sollverzögerung z-ext werden in einem Verknüpfungsschritt 46 zu einer resultierenden Sollverzögerung z-RES verknüpft. Auf der Grundlage der gebildeten Sollverzögerung z-RES bestimmt die Steuereinheit 21 im Drucksteuermodus 24 den resultierenden Bremsdruck P-RES. Die interne Wunschverzögerung z-int und die externe Sollverzögerung z-ext werden in einem Ausführungsbeispiel addiert. Alternativ kann auch der resultierende Bremsdruck P-RES auf den Wert der höchsten der mehreren zu berücksichtigenden Bremsanforderungen 19, 30 gesetzt werden.

Nach Zurücknahme der externen Bremsanforderung 30 während des Drucksteuermodus 24 tritt der Ablauf des Verfahrens zur Einstellung von Bremsdrücken in einen Beendigungspfad 35, welcher den Vorgang der Beendigung des Drucksteuermodus 24 und damit der Wiederaufnahme des Normalbremsmodus 18 repräsentiert. Der Drucksteuermodus 24 wird dabei nicht zwangsläufig sofort mit Zurücknahme der externen Bremsanforderung 30, sondern zusätzlich in Abhängigkeit eines Vergleichs 32 der Fahrerbremsanforderung 19 mit einem vorgegebenen Schwellwert 33 beendet. Der Drucksteuermodus 24 wird dabei beendet, nachdem die erfasste Fahrerbremsanforderung 19 den vorgegebenen Schwellwert 33 überschreitet.

Solange bei einer Prüfung 34 das Vorliegen einer externen Bremsanforderung 30 festgestellt wird, verbleibt es beim Drucksteuerbetrieb 24. Sobald die externe Bremsanforderung 30 bzw. die von der Steuereinheit 21 angeforderte externe Sollverzögerung z-ext einen Wert Null annimmt, wird der Vergleich 32 der Fahrerbremsanforderung 19 bzw. die Wunschverzögerung z-int, welche die Fahrerbremsanforderung 19 als physikalische Größe ausdrückt, mit dem vorgegebenen Schwellwert 33 angefordert.

In einem Ausführungsbeispiel der Erfindung wird die Fahrerbremsanforderung 19 bei Zurücknahme der externen Bremsanforderung 30 abgespeichert und der Schwellwert 33anhand der abgespeicherten Wunschverzögerung (z-int) der Fahrerbremsanforderung (19) bestimmt. Der Schwellwert 33, welcher qualitativ von der Fahrerbremsanforderung 19 bestimmt ist, wird mit einem vorgegebenen Toleranzwert T über ein Verknüpfungsglied 40 gewichtet. Der Toleranzwert T beträgt vorteilhaft 3 bis 5 Prozent (0.3 bis 0.5 m/s²).

Zur Speicherung der Fahrerbremsanforderung 19 beziehungsweise einer der Fahrerbremsanforderung 19 entsprechenden physikalischen Größe, hier einer Verzögerung, ist ein Speicherelement 39 vorgesehen. Sobald die aktuell festgestellte Fahrerbremsanforderung 19 diesen Schwellwert 33 überschreitet, wird der Drucksteuermodus 24 beendet, sodass im Normalbremsmodus 18 die Bremsdrücke vom Fahrer des Kraftfahrzeugs unmittelbar und mit voller Kontrolle eingestellt werden können. Dieser Vorgang ist in dem Schaubild durch den weiteren Verlauf des Beendigungspfads 35 repräsentiert. Ergibt der Vergleich 32 eine Fahrerbremsanforderung 30 unter dem Schwellwert 33, so verbleibt das Verfahren zur Einstellung der Bremsdrücke P im Drucksteuermodus 24, was durch die Rückstellschlaufe 41 repräsentiert ist. Im Ausführungsbeispiel gemäß Fig. 2 wird dem Vergleich 24 fortlaufend derselbe Schwellwert 33 vorgegeben, welcher aus der Fahrerbremsanforderung 19 bei Rücknahme der externen Bremsanforderung 30 ermittelt wurde.

Fig. 3 zeigt ein Flussschaubild eines zweiten Ausführungsbeispiels eines Verfahrens zum Einstellen von Bremsdrücken. Das Verfahren stimmt mit Ausnahme der nachfolgend beschriebenen Unterschiede mit dem Ausführungsbeispiel gemäß Fig. 2 überein. Im Ausführungsbeispiel gemäß Fig. 3 erfolgt eine laufende Aktualisierung 47 des Schwellwert 33 mit dem aktuellen Größenwert z-int der Fahrerbremsanforderung 19. Der aktualisierte Schwellwert 33 wird dem folgenden Vergleich 32 mit der dann geltenden Wunschverzögerung z-int der Fahrerbremsanforderung 19 zugrunde gelegt. Darunter ist zu verstehen, dass der im Speicherelement 39 abgelegte Wert durch den aktuellen Wert der Fahrerbremsanforderung 19 bzw. einer der Fahrerbremsanforderung 19 entsprechenden physikalischen Größe, hier die Wunschverzögerung z-int, ersetzt und für die folgende Verfahrensschleife mit einem Vergleich 32 bereit gehalten wird. Der aktualisierte Schwellwert 33 wird dann dem folgenden Vergleich 32 mit einer aktuellen Wunschverzögerung (z-int) zugrunde gelegt. Da der Drucksteuermodus 24 beendet wird, sobald die Fahrerbremsanforderung größer ist als der Schwellwert 33, wird die Aktualisierung nur solange in einer Aktualisierungsschleife durchgeführt, wie die aktuelle Wunschverzögerung (z-int) kleiner ist als der zuletzt abgespeicherte Wert.

Außerdem ist im Unterschied zum Ausführungsbeispiel gemäß Fig. 2 bei dem Ausführungsbeispiel des Betriebsverfahrens gemäß Fig. 3 ein weiteres Kriterium zur Beendigung des Drucksteuerbetriebs 24 vorgesehen. Nach dem Vergleich 32 der aktuellen Fahrerbremsanforderung 19 mit dem Schwellwert 33 wird auf dem Beendigungspfad 35 zusätzlich ein Vergleich 36 der Geschwindigkeit 37 des Fahrzeugs mit einer vorgegebenen Umschaltgeschwindigkeit 38 durchgeführt. Der Drucksteuermodus 24 wird beendet, wenn die Prüfung 34 das Vorliegen eines Wertes der externen Bremsanforderung 30 von Null ergeben hat und die aktuelle Geschwindigkeit 37 des Fahrzeugs die vorgegebene Umschaltgeschwindigkeit 38 überschritten hat. Bei einer aktuellen Geschwindigkeit 37 kleiner der Umschaltgeschwindigkeit 38 wird der Bremsdruck weiterhin im Drucksteuermodus 24 eingestellt. Die Umschaltgeschwindigkeit 38 beträgt in einem vorteilhaften Ausführungsbeispiel 30 km/h. Auf diese Weise ist sichergestellt, dass bei einer Bremsung, bei der es zu einer Überlagerung einer externen Bremsanforderung 30 und einer Fahrerbremsanforderung 19 gekommen ist, das heißt der Fahrer bei gleichzeitiger externer Bremsanforderung 30 hinzubremst, nach Zurücknahme der externen Bremsanforderung 30 und noch anhaltender Fahrerbremsanforderung 19 es im Drucksteuerbetriebs 24 verbleibt. Daher kann es in dem sensiblen Geschwindigkeitsbereich unterhalb der Umschaltgeschwindigkeit 38 bei einer Zunahme der Fahrerbremsanforderung 19 bis zum Schwellwert 33 oder einer Veränderung der Fahrerbremsanforderung 19 auf einen kleineren Wert der Fahrerbremsanforderung 19, nicht zu einem Rucken oder einer Unterbremsung, auftretend bei einer Beendigung des Drucksteuerbetriebs 24 bei Übergang zum Normalbremsmodus 18, kommen. Der Wert der Umschaltgeschwindigkeit 38 ist in einem Speicherelement 42 abgelegt.

Sowohl im Ausführungsbeispiel gemäß Fig. 2 als auch im Ausführungsbeispiel gemäß Fig. 3 ist die Rückstellschlaufe 41 der fortlaufenden Vergleiche 42 der Fahrerbremsanforderung 19 mit dem vorgegebenen Schwellwert 22 zeitlich begrenzt. Hierzu ist eine Zeiterfassung 47 vorgesehen, wobei die Zeit t seit der Rücknahme der externen Bremsanforderung 30 erfasst wird. Nach Ablauf einer vorgegebenen Zeitdauer tu seit Rücknahme der externen Bremsanforderung 30 wird der Drucksteuermodus 24 zwingend beendet, auch wenn die Fahrerbremsanforderung 19 nicht den Schwellwert 33 überschritten hat. Die vorgegebene Zeitdauer für die Beendigung des Drucksteuermodus 24 beträgt zwischen zwei und fünfzehn Sekunden, beispielsweise acht Sekunden.

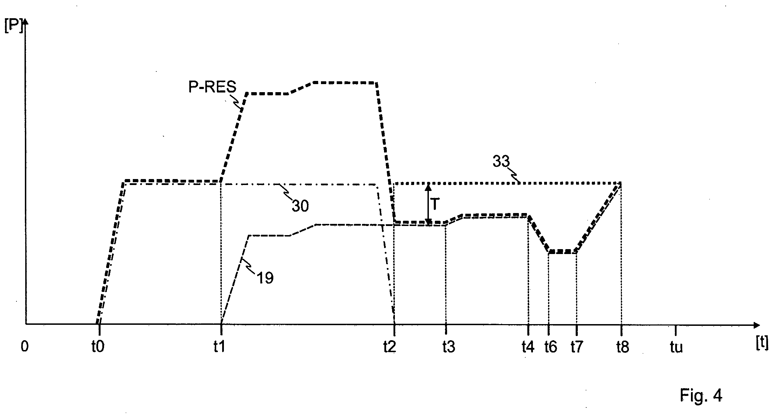

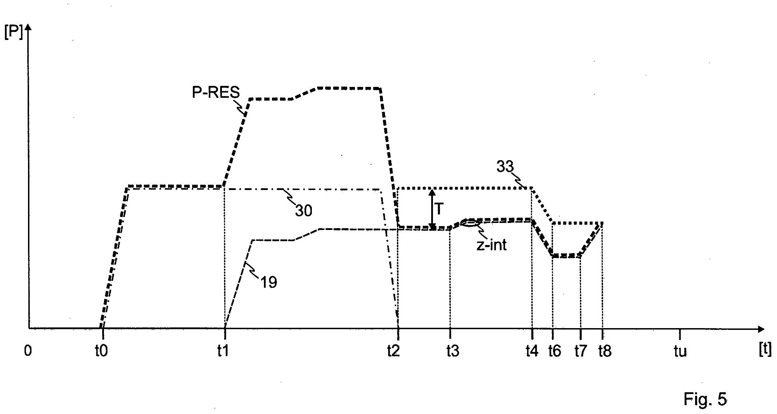

Fig. 4, 5 zeigen grafische Schaubilder mit einem stilisierten Verlauf eines beispielhaften resultierenden Bremsdrucks P-RES während eines Bremsvorgangs im Drucksteuermodus zum Einstellen des Bremsdrucks P-RES gemäß einem erfindungsgemäßen Verfahren nach einem der oben beschriebenen Ausführungsbeispiele. Der resultierende Bremsdruck P-RES wird dabei unter Berücksichtigung der Fahrerbremsanforderung 19 und der externen Bremsanforderung 30 (Fig. 2, 3) bestimmt, welche im Schaubild ebenfalls als zeitbezogene Verläufe dargestellt sind.

Der resultierende Bremsdruck P-RES enthält von Zeitpunkt t0 bis zum Zeitpunkt t1, zu dem der Fahrer zusätzlich bremst, im Wesentlichen nur den Anteil der externen Bremsanforderung 30. Wird wie im bevorzugten Ausführungsbeispiel die externe Bremsanforderung 30 in der Dimension "Verzögerung" von einem Fahrerassistenzsystem angefordert, so wird die angeforderte Sollverzögerung unmittelbar in einen Soll-Bremsdruck umgerechnet, ohne dass ein Einfluss zusätzlich angeforderter Bremsleistung berücksichtigt wird. Zwischen den Zeitpunkten t1 und t2 enthält der resultierende Bremsdruck P-RES sowohl Anteile entsprechend der externen Bremsanforderung 30 als auch der zusätzlichen Fahrerbremsanforderung 19. Zum Zeitpunkt t2 ist die externe Bremsanforderung 30 auf den Wert Null zurückgenommen und es liegt nur noch eine Fahrerbremsanforderung 19 vor. Erfindungsgemäß wird nun nicht spontan in den Normalbremsmodus gewechselt, sondern der Bremsdruck wird weiterhin als P-RES von der Steuereinheit 21 (Fig. 1) im Drucksteuermodus bestimmt.

Zum Zeitpunkt t2 wird nach Zurücknahme der externen Bremsanforderung 30 auf Null der Größenwert der Fahrerbremsanforderung 19 abgespeichert und unter zusätzlicher Berücksichtigung des Toleranzwertes T (Fig. 2, 3) aus dem abgespeicherten Größenwert der Schwellwert 33 bestimmt. Im weiteren Verlauf der Bremsung wird erst dann in den Normalbremsmodus gewechselt und dem Fahrer die volle und alleinige Kontrolle über den Bremsvorgang übergeben, wenn die Fahrerbremsanforderung 19 den Schwellwert 33 überschreitet.

Zum Zeitpunkt t3 steigt die Fahrerbremsanforderung 19 im beispielhaften Bremsverlauf an und sinkt im Intervall zwischen den Zeitpunkten t4, t6 wieder ab. Ab dem Zeitpunkt t7 fordert der Fahrer des Kraftfahrzeugs wieder mehr Bremsleistung und zum Zeitpunkt t8 überschreitet die Fahrerbremsanforderung 19 den Schwellwert 33, so dass der Drucksteuermodus beendet wird.

Im Ausführungsbeispiel gemäß Fig. 4 wird ein konstanter Schwellwert 33 ermittelt, welcher bis zur Beendigung des Drucksteuermodus zum Zeitpunkt t8 vorgegeben wird.

Fig. 5 zeigt stilisiert ein Ausführungsbeispiel der Erfindung mit den gleichen Verläufen der Fahrerbremsanforderung 19 und der externen Bremsanforderung 30, wobei im Unterschied zu der Darstellung in Fig. 4 im Drucksteuermodus nach Zurücknahme der externen Bremsanforderung 30 auf Null eine Aktualisierung (Fig. 3) des Schwellwertes 33 in Abhängigkeit der Fahrerbremsanforderung 19 und des Toleranzwertes T erfolgt. Dazu aktualisiert die Steuereinheit 21 den Schwellwert 33 kontinuierlich mit dem aktuellen Größenwert z-int' der Fahrerbremsanforderung 19, wobei der aktualisierte Schwellwert 33 dem folgenden Vergleich 32 mit dem dann geltenden Größenwert z-int der Fahrerbremsanforderung 19 zugrunde gelegt wird (vergleiche Beschreibung zu Fig. 3). Im Ausführungsbeispiel entsprechend dem grafischen Schaubild der Fig. 5 wird der Schwellwert 33 aktualisiert, wenn die Fahrerbremsanforderung 19 kleiner ist als die Fahrerbremsanforderung 19 der vorhergehenden Aktualisierungsschleife.. Erhöhungen der Fahrerbremsanforderung 19 werden bei der Aktualisierung, hier ab dem Zeitpunkt t4, nicht berücksichtigt, so dass eine rasche Rückschaltung in den Normalbremsmodus gewährleistet ist.

Im Ausführungsbeispiel gemäß Fig. 3 und dem dazugehörigen stilisierten Schaubild gemäß Fig. 5 erfolgt eine Aktualisierung des Schwellwertes 33 zwischen den Zeitpunkten t4 und t6 und weiterhin zwischen den Zeitpunkten t6 und t7, nicht jedoch während des Anstiegs der Fahrerbremsanforderung 19 nach dem Zeitpunkt t3. Eine Erhöhung des Schwellwerts 33 erfolgt zu keinem Zeitpunkt.

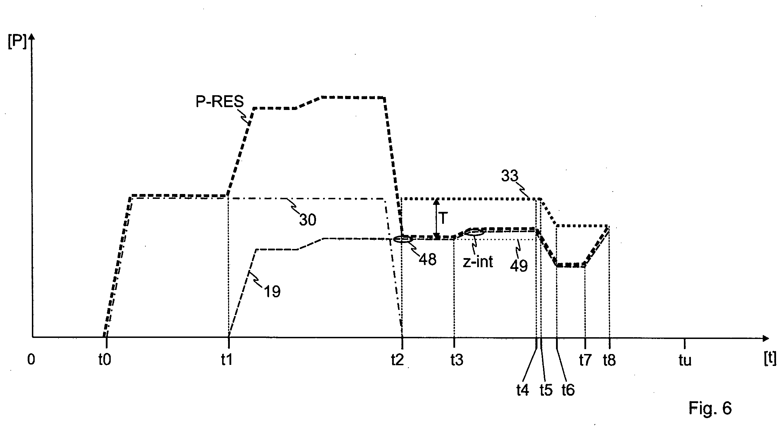

Fig. 6 zeigt stilisiert eine Variante des anhand von Fig. 5 beschriebenen Ausführungsbeispiels eines Verfahrens zur Bestimmung der Bremsdrücke, wobei im Drucksteuermodus nach Zurücknahme der externen Bremsanforderung 30 auf Null eine fortlaufende Aktualisierung (Fig. 3) des Schwellwertes 33 in Abhängigkeit der Fahrerbremsanforderung 19 erfolgt. Dabei wird analog Fig. 5 der Schwellwert 33 aktualisiert, wenn die Fahrerbremsanforderung 19 kleiner ist als die Fahrerbremsanforderung 19 der vorhergehenden Aktualisierungsschleife. Im Unterschied zum Ausführungsbeispiel gemäß Fig.5 erfolgt eine Aktualisierung des Schwellwerts 33 nur dann, wenn der aktuelle Größenwert, also die Wunschverzögerung z-int, kleiner als ein Bezugswert 48 der die Fahrerbremsanforderung repräsentierenden Größe zu einem bestimmten früheren Zeitpunkt ist. Als Bezugswert 48 wird im gezeigten Ausführungsbeispiel die Wunschverzögerung zum Zeitpunkt t2 herangezogen, zu dem die externe Bremsanforderung 30 auf Null reduziert ist. Im beispielhaften Bremsverlauf, der durch die in den Fig. 4, 5, 6 Verläufe charakterisiert ist, wird nach der zwischenzeitlichen Erhöhung der Fahrerbremsanforderung 19 ab dem Zeitpunkt t3 erst zum Zeitpunkt t5 das Niveau des Bezugswerts erreicht und ab diesem Zeitpunkt der Schwellwert aktualisiert. Eine Erhöhung des vorzugebenden Schwellwerts gegenüber dem aus dem Niveau 49 des Bezugswerts 48 folgenden Wert erfolgt nicht.

### Bezugszeichenliste (Bestandteil der Beschreibung)

- 1: Bremsanlage
- 2: Kraftfahrzeug
- 3: Vorderachse
- 4: Hinterachse
- 5: Rad
- 6: Radbremse
- 7: Bremszylinder
- 8: Federspeicher
- 9: Bremspedal
- 10: Betriebsbremsventil
- 11: Bremsleitung
- 12: Druckmittelvorrat
- 13: erster Bremskreis
- 14: zweiter Bremskreis
- 15: zweiter Druckmittelvorrat
- 16: Relaisventil
- 17: Relaisventil
- 18: Normalbremsmodus
- 19: Fahrerbremsanforderung
- 20: Drucksteuerventil
- 21: Steuereinheit
- 22: Einlassventil
- 23: Auslassventil
- 24: Drucksteuermodus
- 25: Aktivierungsventil
- 26: Druckleitung
- 27: dritter Druckmittelvorrat
- 28: Doppelrückschlagventil
- 29: Drehzahlsensor
- 30: externe Bremsanforderung
- 31: Erfassung
- 32: Vergleich
- 33: Schwellwert
- 34: Prüfung
- 35: Beendigungspfad
- 36: Vergleich
- 37: Geschwindigkeit
- 38: Umschaltgeschwindigkeit
- 39: Speicherelement
- 40: Verknüpfungselement
- 41: Rückstellschlaufe
- 42: Speicherelement
- 43: Bremssignalgeber
- 44: Bremsleitung
- 45: Umrechnungsschritt
- 46: Verknüpfungsschritt
- 47: Aktualisierung
- 48: Bezugswert
- 49: Niveau
- T: Toleranzwert
- P: Bremsdruck
- P-: Soll Solldruck
- P-RES: Resultierender Bremsdruck
- z-int: Wunschverzögerung
- z-int': aktueller Größenwert
- z-ext: externe Solverzögerung
- z-RES: resultierende Sollverzögerung
- t1: Zeitpunkt
- t2: Zeitpunkt
- t3: Zeitpunkt
- t4: Zeitpunkt
- t5: Zeitpunkt
- t6: Zeitpunkt
- t7: Zeitpunkt
- t8: Zeitpunkt
- tu: vorgegebene Zeitdauer

## Patentansprüche

1. Verfahren zum Einstellen von Bremsdrücken (P-Soll, P-RES) an pneumatisch betätigten Radbremsen (6) eines Kraftfahrzeugs (2), wobei in einem Normalbremsmodus (18) ein Bremsdruck (P-Soll) in Abhängigkeit einer Fahrerbremsanforderung (19) eingestellt wird, welche vom Fahrer des Kraftfahrzeugs (2) bestimmt wird, und eine Steuereinheit (21) während des Empfangs einer von der Fahrerbremsanforderung (19) unabhängigen externen Bremsanforderung (30) in einem Drucksteuermodus (24) an den jeweiligen Radbremsen (6) einen resultierenden Bremsdruck (P-RES) unter Berücksichtigung der externen Bremsanforderung (30) und der Fahrerbremsanforderung (19) einsteuert,
**dadurch gekennzeichnet, dass**
der Drucksteuermodus (24) nach Zurücknahme der externen Bremsanforderung (30) in Abhängigkeit eines Vergleichs (32) eines der Steuereinheit (21) eingegeben und die Fahrerbremsanforderung (19) repräsentierenden Größenwerts (z-int) mit einem vorgegebenen Schwellwert (33) beendet wird.

2. Verfahren nach Anspruch 1,
**dadurch gekennzeichnet, dass**
der Drucksteuermodus (24) beendet wird, nachdem der Größenwert (z-int) der Fahrerbremsanforderung (19) den vorgegebenen Schwellwert (33) überschreitet.

3. Verfahren nach Anspruch 1 oder 2
**dadurch gekennzeichnet, dass** der Schwellwert (33) in derselben Dimension wie der Größenwert (z-int) der Fahrerbremsanforderung (19) vorgegeben wird, wobei der Größenwert (z-int) der Fahrerbremsanforderung (19) bei Zurücknahme der externen Bremsanforderung (30) abgespeichert wird und der Schwellwert (33) anhand des abgespeicherten Größenwerts (z-int) der Fahrerbremsanforderung (19) bestimmt wird.

4. Verfahren nach Anspruch 3,
**dadurch gekennzeichnet, dass**
der Schwellwert (33) durch Verknüpfung des abgespeicherten Größenwerts (z-int) der Fahrerbremsanforderung (19) mit einem Toleranzwert (T) gebildet wird.

5. Verfahren nach Anspruch 3 oder 4,
**gekennzeichnet durch**
eine fortlaufende Aktualisierung (47) des Schwellwert (33) mit dem aktuellen Größenwert (z-int') der Fahrerbremsanforderung (19), wobei der aktualisierte Schwellwert (33) dem folgenden Vergleich (32) mit dem dann geltenden Größenwert (z-int) der Fahrerbremsanforderung (19) zugrunde gelegt wird.

6. Verfahren nach Anspruch 5,
**dadurch gekennzeichnet, dass**
Erhöhungen der Fahrerbremsanforderung (19) bei der Aktualisierung (47) nicht berücksichtigt werden.

7. Verfahren nach einem der vorhergehenden Ansprüche,
**gekennzeichnet durch**
die Ermittlung einer Wunschverzögerung (z-int) als die Fahrerbremsanforderung (19) repräsentierenden Größenwert.

8. Verfahren nach einem der vorhergehenden Ansprüche,
**dadurch gekennzeichnet, dass**
der Drucksteuermodus (24) in Abhängigkeit eines Vergleichs (36) einer aktuellen Geschwindigkeit (37) des Kraftfahrzeugs (2) und einem vorgegebenen Umschaltgeschwindigkeitswert (38) beendet wird.

9. Verfahren nach einem der vorhergehenden Ansprüche,
**dadurch gekennzeichnet, dass**
der Drucksteuermodus (24) nach Ablauf einer vorgegebenen Zeitdauer (tu) seit Rücknahme der externen Bremsanforderung (30) beendet wird.

10. Verfahren nach einem der vorhergehenden Ansprüche,
**dadurch gekennzeichnet, dass**
die Steuereinheit (21) bei Vorliegen einer Blockierneigung bestimmter Räder (5) den Bremsdruck (P) der jeweiligen Radbremsen (6) der Räder (5) im Drucksteuermodus (24) steuert oder regelt.

11. Verfahren nach einem der vorhergehenden Ansprüche,
**dadurch gekennzeichnet, dass**
die Steuereinheit (21) Bremsdrücke (P) an den Radbremsen (6) jeweils über ein Drucksteuerventil (20) steuert und Bremskreise (13, 14) der Drucksteuerventile (20) über Ansteuerung jeweils eines Aktivierungsventils (25) pro Bremskreis (13, 14) mit einem Druckmittelvorrat (12, 15) verbindet.

12. Bremsanlage eines Kraftfahrzeugs (2) zur Durchführung des Verfahrens nach einem der Ansprüche 1 bis 11, mit pro Rad (5) einem Bremszylinder (7) und einem Drucksteuerventil (20), welche von einer Steuereinheit (21) steuerbar sind, sowie einem vom Fahrer des Kraftfahrzeugs (2) betätigbaren Betriebsbremsventils (10) und einem Bremssignalgeber (43), wobei die Bremsdrücke (P-Soll, P-RES) in den Bremszylindern (7) in einem Normalbremsmodus (18) in Abhängigkeit einer Betätigung des Betriebsbremsventils (10) durch den Fahrer und einer Fahrerbremsanforderung (19), ermittelt über den Bremssignalgeber (43), und in einem Drucksteuer-modus (24) über das jeweilige Drucksteuerventil (20) von der Steuereinheit (21) einstellbar sind, wobei die Steuereinheit (21) zum Empfang einer von der Fahrerbremsanforderung (19) unabhängigen Bremsanforderung (30) sowie zur Umschaltung in einen für diesen Fall vorgesehenen Drucksteuermodus (24) ausgebildet ist,
**dadurch gekennzeichnet, dass**
der Steuereinheit (21) ein Schwellwert (33) für die Beendigung des Drucksteuermodus (24) vorgegeben ist und die Steuereinheit (21) zur Durchführung von Vergleichen (32) eines die Fahrerbremsanforderung (19) repräsentierenden Größenwerts (z-int) mit dem Schwellwert (33) ausgebildet ist.

13. Bremsanlage nach Anspruch 12,
**gekennzeichnet durch**
ein Antiblockiersystem, wobei die Steuereinheit (21) bei Vorliegen einer Blockierneigung bestimmter Räder (5) den Bremsdruck (P) der Radbremsen (6) der Räder (5) im Drucksteuermodus (24) steuert oder regelt.

14. Bremsanlage nach Anspruch 12 oder 13,
**dadurch gekennzeichnet, dass**
die Drucksteuerventile (20) in einem oder mehreren Bremskreisen (13, 14) angeordnet sind, welche über jeweils ein Aktivierungsventil (25) mit einem Druckmittelvorrat (12, 15) verbindbar sind, wobei jedes Aktivierungsventil (25) elektrisch an die Steuereinheit (21) angeschlossen und schaltbar ist.

15. Bremsanlage nach Anspruch 14,
**dadurch gekennzeichnet, dass**
die Drucksteuerventile (20) der Räder (5) einer Achse (3, 4) des Kraftfahrzeugs (2) über einen gemeinsamen Bremskreis (13, 14) mit einem Aktivierungsventil (25) mit einem Druckmittelvorrat (12, 15) verbunden sind.

16. Kraftfahrzeug mit einer Bremsanlage nach einem der Ansprüche 12 bis 15, zur Durchführung eines Verfahrens nach einem der Ansprüche 1 bis 11.

## Claims

1. Method for adjusting brake pressures (P-Soll, P-RES) on pneumatically operated wheel brakes (6) of a motor vehicle (2), wherein in a normal braking mode (18), a brake pressure (P-Soll) is set depending on a driver brake request (19) determined by the driver of the motor vehicle (2), and a control unit (21), during reception of an external brake request (30) which is independent of the driver brake request (19), in a pressure control mode (24), sets a resulting brake pressure (P-RES) at the respective wheel brakes (6) taking into account the external brake request (30) and the driver brake request (19),
**characterized in that**
after revocation of the external brake request (30), the pressure control mode (24) is terminated depending on a comparison (32) of a value (z-int), entered into the control unit (21) and representing the driver brake request (19), with a predefined threshold value (33).

2. Method according to Claim 1,
**characterized in that**
the pressure control mode (24) is terminated after the value (z-int) of the driver brake request (19) exceeds the predefined threshold value (33).

3. Method according to Claim 1 or 2,
**characterized in that** the threshold value (33) is predefined in the same dimension as the value (z-int) of the driver brake request (19), wherein the value (z-int) of the driver brake request (19) on revocation of the external brake request (30) is stored, and the threshold value (33) is determined from the stored value (z-int) of the driver brake request (19).

4. Method according to Claim 3,
**characterized in that**
the threshold value (33) is formed by linking the stored value (z-int) of the driver brake request (19) with a tolerance value (T).

5. Method according to Claim 3 or 4,
**characterized by**
a continual update (47) of the threshold value (33) with the current value (z-int') of the driver brake request (19), wherein the updated threshold value (33) forms the basis for the following comparison (32) with the then applicable value (z-int) of the driver brake request (19).

6. Method according to Claim 5,
**characterized in that**
increases in the driver brake request (19) are not taken into account on the update (47).

7. Method according to any of the preceding claims, **characterized by**
determination of a desired deceleration (z-int) as a value representing the driver brake request (19).

8. Method according to any of the preceding claims, **characterized in that**
the pressure control mode (24) is terminated depending on a comparison (36) of a current speed (37) of the motor vehicle (2) and a predefined switching speed value (38) .

9. Method according to any of the preceding claims, **characterized in that**
the pressure control mode (24) is terminated after expiry of a predefined duration (tu) since revocation of the external brake request (30).

10. Method according to any of the preceding claims, **characterized in that**
the control unit (21), in the presence of a blocking tendency of certain wheels (5), controls or regulates the brake pressure (P) of the respective wheel brakes (6) of the wheels (5) in the pressure control mode (24) .

11. Method according to any of the preceding claims, **characterized in that**
the control unit (21) controls the brake pressure (P) at the wheel brakes (6) via a respective pressure control valve (20), and connects brake circuits (13, 14) of the pressure control valves (20) to a pressure medium store (12, 15) via operation of a respective actuation valve (25) per brake circuit (13, 14).

12. Brake system of a motor vehicle (2) for performance of the method according to any of Claims 1 to 11, with, for each wheel (5), a brake cylinder (7) and a pressure control valve (20) which can be controlled by a control unit (21), and with a service brake valve (10) which can be operated by the driver of the motor vehicle (2), and with a brake signal emitter (43), wherein the brake pressures (P-Soll, P-RES) in the brake cylinders (7) can be set in a normal braking mode (18) depending on an actuation of the service brake valve (10) by the driver and a driver brake request (19) determined via the brake signal emitter (43), and in a pressure control mode (24) by the control unit (21) via the respective pressure control valve (20), wherein the control unit (21) is configured to receive a brake request (30) which is independent of the driver brake request (19) and to switch into a pressure control mode (24) provided for this case,
**characterized in that**
a threshold value (33) for termination of the pressure control mode (24) is predefined for the control unit (21), and the control unit (21) is configured to perform comparisons (32) of a value (z-int) representing the driver brake request (19) with the threshold value (33) .

13. Brake system according to Claim 12,
**characterized by**
an antilock braking system, wherein the control unit (21), in the presence of a blocking tendency of certain wheels (5), controls or regulates the brake pressure (P) of the wheel brakes (6) of the wheels (5) in pressure control mode (24).

14. Brake system according to Claim 12 or 13,
**characterized in that**
the pressure control valves (20) are arranged in one or more brake circuits (13, 14) which can each be connected to a pressure medium store (12, 15) via an actuation valve (25), wherein each actuation valve (25) is connected electrically to the control unit (21) and is switchable.

15. Brake system according to Claim 14,
**characterized in that**
the pressure control valves (20) of the wheels (5) of one axle (3, 4) of the motor vehicle (2) are connected to a pressure medium store (12, 15) via a common brake circuit (13, 14) with an actuation valve (25).

16. Motor vehicle with a brake system according to any of Claims 12 to 15 for performance of a method according to any of Claims 1 to 11.

## Revendications

1. Procédé de réglage de pressions de freinage (P-Soll, P-RES) sur des freins de roues à commande pneumatique (6) d'un véhicule automobile (2), dans lequel, dans un mode de freinage normal (18), une pression de freinage (P-Soll) est réglée en fonction d'une demande de freinage (19) du conducteur qui est déterminée par le conducteur du véhicule automobile (2) et, dans un mode de commande de pression (24), une unité de commande (21) commande une pression de freinage résultante (P-RES) sur les freins de roues (6) respectifs, pendant la réception d'une demande de freinage externe (30) indépendante de la demande de freinage (19) du conducteur, en tenant compte de la demande de freinage externe (30) et de la demande de freinage (19) du conducteur,
**caractérisé en ce qu'**après la cessation de la demande de freinage externe (30), le mode de commande de pression (24) est interrompu en fonction d'une comparaison (32) d'une quantité (z-int) fournie en entrée à l'unité de commande (21) et représentant la demande de freinage (19) du conducteur avec une valeur de seuil prédéterminée (33).

2. Procédé selon la revendication 1,
**caractérisé en ce que** le mode de commande de pression (24) est interrompu après que la quantité (z-int) de la demande de freinage (19) du conducteur a dépassé la valeur de seuil prédéterminée (33).

3. Procédé selon la revendication 1 ou 2,
**caractérisé en ce que** la valeur de seuil (33) est prédéterminée dans la même dimension que la quantité (z-int) de la demande de freinage (19) du conducteur, dans lequel la quantité (z-int) de la demande de freinage (19) du conducteur est stockée lors de la cessation de la demande de freinage externe (30) et la valeur de seuil (33) est déterminée sur la base de la quantité (z-int) stockée de la demande de freinage (19) du conducteur.

4. Procédé selon la revendication 3,
**caractérisé en ce que** la valeur de seuil (33) est obtenue en combinant la quantité (z-int) stockée de la demande de freinage (19) du conducteur avec une valeur de tolérance (T) .

5. Procédé selon la revendication 3 ou 4,
**caractérisé par** une actualisation continue (47) de la valeur de seuil (33) avec la quantité actuelle (z-int') de la demande de freinage (19) du conducteur, dans lequel la valeur de seuil (33) actualisée est utilisée comme base pour la comparaison (32) effectuée ensuite avec la quantité (z-int) alors valide de la demande de freinage (19) du conducteur.

6. Procédé selon la revendication 5,
**caractérisé en ce que** des augmentations de la demande de freinage (19) du conducteur ne sont pas prises en compte lors de l'actualisation (47).

7. Procédé selon l'une des revendications précédentes,
**caractérisé par** la détermination d'une décélération souhaitée (z-int) en tant que quantité représentant la demande de freinage (19) du conducteur.

8. Procédé selon l'une des revendications précédentes,
**caractérisé en ce que** le mode de commande de pression (24) est interrompu en fonction d'une comparaison (36) d'une vitesse actuelle (37) du véhicule automobile (2) et d'une valeur de vitesse de basculement (38) prédéterminée.

9. Procédé selon l'une des revendications précédentes,
**caractérisé en ce que** le mode de commande de pression (24) est interrompu après qu'une période de temps prédéterminée (tu) se soit écoulée depuis la cessation de la demande de freinage externe (30).

10. Procédé selon l'une des revendications précédentes,
**caractérisé en ce que** l'unité de commande (21) commande ou régule la pression de freinage (P) des freins de roues (6) respectifs des roues (5) dans le mode de commande de pression (24) en présence d'une tendance au blocage de certaines roues (5).

11. Procédé selon l'une des revendications précédentes,
**caractérisé en ce que** l'unité de commande (21) commande des pressions de freinage (P) respectives sur les freins de roues (6) par l'intermédiaire d'une vanne de régulation de pression (20) et relie des circuits de freinage (13, 14) des vannes de régulation de pression (20) à une alimentation en fluide de pression (12, 15) en commandant respectivement une vanne d'activation (25) par circuit de freinage (13, 14).

12. Système de freinage d'un véhicule automobile (2) destiné à mettre en oeuvre le procédé selon l'une des revendications 1 à 11, comprenant un cylindre de frein (7) et une vanne de régulation de pression (20) par roue (5), qui peut être commandée par une unité de commande (21), ainsi qu'une vanne de freinage de service (10) qui peut être commandée par le conducteur du véhicule automobile (2) et un générateur de signaux de freinage (43), dans lequel les pressions de freinage (P-Soll, P-RES) dans les cylindres de freins (7) sont réglables par l'unité de commande (21) dans un mode de freinage normal (18) en fonction d'un actionnement de la vanne de freinage de service (10) par le conducteur et d'une demande de freinage (19) du conducteur, déterminée par l'intermédiaire du générateur de signaux de freinage (43) et, dans un mode de commande de pression (24), par l'intermédiaire de la vanne de régulation de pression (20) respective, dans lequel l'unité de commande (21) est conçue pour recevoir une demande de freinage (30) qui est indépendante de la demande de freinage (19) du conducteur et pour basculer sur un mode de commande de pression (24) prévu pour ce cas,
**caractérisé en ce qu'**une valeur de seuil (33) pour l'interruption du mode de commande de pression (24) est prédéterminée dans l'unité de commande (21), et **en ce que** l'unité de commande (21) est conçue pour effectuer des comparaisons (32) d'une quantité (Z-int) représentant la valeur de la demande de freinage (19) du conducteur avec la valeur de seuil (33).

13. Système de freinage selon la revendication 12, **caractérisé par** un système de freinage antiblocage, dans lequel, dans le mode de commande de pression (24), l'unité de commande (21) commande ou régule la pression de freinage (P) des freins de roues (6) des roues (5) en présence d'une tendance au blocage de certaines roues (5).

14. Système de freinage selon la revendication 12 ou 13,
**caractérisé en ce que** les vannes de régulation de pression (20) sont disposées dans un ou plusieurs circuits de freinage (13, 14) qui peuvent respectivement être reliés à une alimentation en fluide de pression (12, 15) par une vanne d'activation (25), dans lequel chaque vanne d'activation (25) est raccordée électriquement à l'unité de commande (21) et peut être commutée.

15. Système de freinage selon la revendication 14, **caractérisé en ce que** les vannes de régulation de pression (20) des roues (5) d'un essieu (3, 4) du véhicule automobile (2) sont reliées à une alimentation en fluide de pression (12, 15) par l'intermédiaire d'un circuit de freinage (13, 14) commun comportant une vanne d'activation (25).

16. Véhicule automobile équipé d'un dispositif de freinage selon l'une des revendications 12 à 15, destiné à mettre en oeuvre un procédé selon l'une des revendications 1 à 11.
